(19) Europäisches Patentamt
European Patent Office
Office européen des brevets

(11) EP 4 438 638 A1

(12) **EUROPEAN PATENT APPLICATION**
published in accordance with Art. 153(4) EPC

(43) Date of publication:
**02.10.2024 Bulletin 2024/40**

(21) Application number: **22899050.3**

(22) Date of filing: **24.11.2022**

(51) International Patent Classification (IPC):
***C08F 210/16*** *(2006.01)* ***C08F 4/6592*** *(2006.01)*
***C08F 4/659*** *(2006.01)*

(52) Cooperative Patent Classification (CPC):
**C08F 4/659; C08F 4/6592; C08F 210/16**

(86) International application number:
**PCT/KR2022/018707**

(87) International publication number:
**WO 2023/096368 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 KR 20210163906**

(71) Applicant: **LOTTE CHEMICAL CORPORATION**
**Seoul 05551 (KR)**

(72) Inventors:
- **KIM, Ho-Seok**
  **Daejeon 34110 (KR)**
- **HONG, Youn-Jin**
  **Daejeon 34110 (KR)**
- **SHIN, Eun-Hye**
  **Daejeon 34110 (KR)**
- **LEE, Rai-Ha**
  **Daejeon 34110 (KR)**
- **HA, Dal-Yong**
  **Daejeon 34110 (KR)**
- **JANG, Ji-Hoon**
  **Daejeon 34110 (KR)**
- **CHAE, Byung-Hun**
  **Daejeon 34110 (KR)**

(74) Representative: **Germain Maureau**
**12, rue Boileau**
**69006 Lyon (FR)**

(54) **ETHYLENE ALPHA-OLEFIN COPOLYMER, AND PREPARING METHOD THEREOF**

(57) According to the present invention, provided is an ethylene alpha-olefin copolymer that comprises an ethylene structural unit and an alpha-olefin structural unit, has two melting temperature (Tm) peaks when measured by differential scanning calorimetry (DSC), and has a zero shear viscosity of at least 10,000 Pa*s.

FIG. 1:

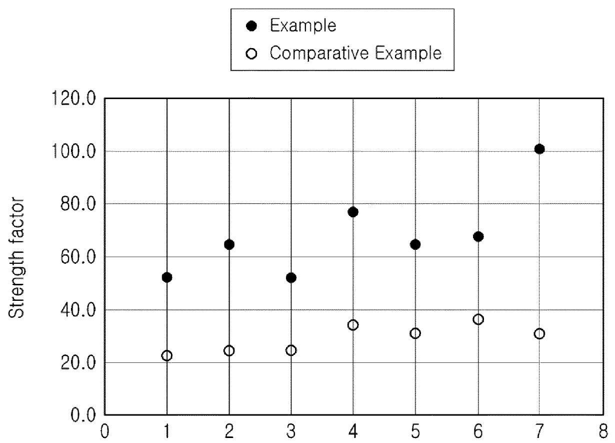


EP 4 438 638 A1

## Description

Technical Field

The present disclosure relates to an ethylene alpha-olefin copolymer and a method of preparing the same.

Background Art

Polyolefin polymerized under a metallocene-based catalyst having a single active site may not only have a narrow molecular weight distribution, but also a constant comonomer distribution.

Such polyolefins have a single melting temperature and therefore exhibit low thermal stability because they melt only at a specific temperature. Accordingly, it is necessary to improve thermal stability after processing by adding a crosslinking process or the like.

Summary of Invention

Technical Problem

An aspect of the present disclosure is to provide an ethylene alpha-olefin copolymer having improved processability and thermal stability after processing.

Solution to Problem

According to an aspect of the present disclosure, an ethylene alpha-olefin copolymer containing an ethylene structural unit and an alpha-olefin structural unit, the ethylene alpha-olefin copolymer includes two melting temperature (Tm) peaks when measured by differential scanning calorimetry (DSC), and a zero shear viscosity of at least 10,000 Pa*s.

According to another aspect of the present disclosure, a method of preparing an ethylene alpha-olefin copolymer includes polymerizing an ethylene monomer and an alpha-olefin monomer under a catalyst composition containing an R type and an S type of a transition metal compound represented by the following formula 1.

[Formula 1]

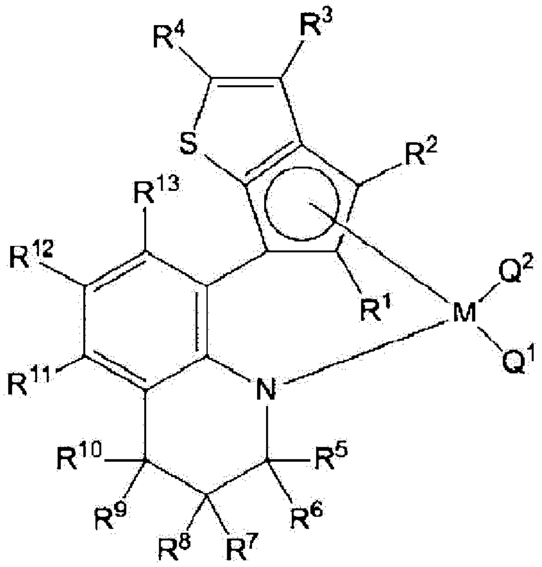

In Formula 1 above,

M is a group 4 transition metal;
$Q^1$ and $Q^2$ are each independently halogen, $(C_1-C_{20})$alkyl, $(C_2-C_{20})$alkenyl, $(C_2-C_{20})$alkynyl, $(C_6-C_{20})$aryl, $(C_1-C_{20})$alkyl $(C_6-C_{20})$aryl, $(C_6-C_{20})$aryl $(C_1-C_{20})$alkyl, $(C_1-C_{20})$ alkylamido, $(C_6-C_{20})$arylamido or $(C_1-C_{20})$alkylidene;
$R^1$, $R^2$, $R^3$, $R^4$, $R^5$, $R^6$, $R^7$, $R^8$, $R^9$ and $R^{10}$ are each independently hydrogen; $(C_1-C_{20})$alkyl with or without acetal,

a ketal or an ether group; $(C_2-C_{20})$alkenyl with or without an acetal, a ketal or an ether group; $(C_1-C_{20})$alkyl $(C_6-C_{20})$aryl with or without an acetal, a ketal or an ether group; $(C_6-C_{20})$ aryl $(C_1-C_{20})$alkyl with or without an acetal, a ketal or an ether group; or $(C_1-C_{20})$silyl with or without an acetal, a ketal or an ether group; the $R^1$ and $R^2$ are connected to each other to form a ring, the $R^3$ and $R^4$ are connected to each other to form a ring, and two or more of $R^5$ to $R^{10}$ are connected to each other to form a ring; and

$R^{11}$, $R^{12}$ and $R^{13}$ are each independently hydrogen; a $(C_1-C_{20})$alkyl with or without an acetal, a ketal or an ether group; $(C_2-C_{20})$alkenyl with or without an acetal, a ketal or an ether group; a $(C_1-C_{20})$alkyl $(C_6-C_{20})$aryl with or without an acetal, a ketal or an ether group; a $(C_6-C_{20})$aryl$(C_1-C_{20})$alkyl with or without an acetal, a ketal or an ether group; a $(C_1-C_{20})$ silyl with or without an acetal, a ketal or an ether group; a $(C_1-C_{20})$alkoxy; or a $(C_6-C_{20})$aryloxy; the $R^{11}$ and $R^{12}$ are connected to each other to form a ring, and the $R^{12}$ and $R^{13}$ are connected to each other to form a ring.

Advantageous Effects of Invention

According to the present disclosure, an ethylene alpha-olefin copolymer having two different melting temperature (Tm) peaks is provided. The ethylene alpha-olefin copolymer exhibits high zero shear viscosity and strength factors as compared to related art ethylene alpha-olefin copolymers with similar density and melting index (MI), and has excellent processability and thermal stability after processing.

Brief Description of Drawings

FIG. 1 is a graph showing the strength factors of ethylene alpha-olefin copolymers prepared in Examples according to the present disclosure and Comparative Examples.

FIG. 2 is a diagram showing a method of measuring the rate of increase in extensional viscosity.

Best Mode for Invention

Hereinafter, preferred embodiments of the present disclosure will be described. However, the following embodiments of the present disclosure may be modified to have various other forms, and the scope of the present disclosure is not limited thereto.

The term "alkyl," as used in the present disclosure, refers to a monovalent linear or branched saturated hydrocarbon radical consisting of only carbon and hydrogen atoms. Examples of such alkyl radicals are methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl, cyclooctyl, cyclononyl, cyclodecyl, and the like, but the present disclosure is not limited thereto.

In addition, the term "alkenyl," as used in the present disclosure, refers to a linear or branched hydrocarbon radical containing one or more carbon-carbon double bonds, and includes ethenyl, propenyl, butenyl, pentenyl, and the like, but the present disclosure is not limited thereto.

In addition, the term "alkynyl," as used in the present disclosure, refers to a linear or branched hydrocarbon radical containing one or more carbon-carbon triple bonds, such as methynyl, ethynyl, propynyl, butynyl, pentynyl, hexynyl, heptinyl, octinyl, and the like, but the present disclosure is not limited thereto.

In addition, the term "aryl," as used in the present disclosure is an organic radical derived from an aromatic hydrocarbon by removing one hydrogen, and "aryl" includes a single or fused ring system. Specific examples of "aryl" include phenyl, naphthyl, biphenyl, anthryl, fluorenyl, phenanthryl, triphenylenyl, pyrenyl, perylenyl, chrysenyl, naphthacenyl, fluoranthenyl, and the like, but the present disclosure is not limited thereto.

In addition, the term "alkylaryl," as used in the present disclosure, refers to an organic group in which one or more hydrogens of an aryl group are substituted with an alkyl group, and include methylphenyl, ethylphenyl, n-propylphenyl, isopropylphenyl, n-butylphenyl, isopropylphenyl, n-butylphenyl, isobutylphenyl, t-butylphenyl, and the like, but the present disclosure is not limited thereto.

In addition, the term "arylalkyl," as used in the present disclosure, refers to an organic group in which one or more hydrogens of an alkyl group are substituted with an aryl group, and includes, phenylpropyl, phenylhexyl, and the like, but the present disclosure is not limited thereto.

In addition, the term "amido," as used in the present disclosure, refers to an amino group ($-NH_2$) bonded to a carbonyl group (C=O), the term "alkylamido" refers to an organic group in which at least one hydrogen in $-NH_2$ of an amido group is substituted with an alkyl group, the term "arylamido" refers to an organic group in which at least one hydrogen in -NH2 of the amido group is substituted with an aryl group, and the alkyl group in the alkylamido group and the aryl group in the arylamido group may be the same as the examples of the alkyl group and aryl group described above, but the present disclosure is not limited thereto.

In addition, the term "alkylidene," as used in the present disclosure, refers to a divalent aliphatic hydrocarbon group in which two hydrogen atoms are removed from the same carbon atom of the alkyl group, and includes ethylidene, propylidene, isopropylidene, butylidene, pentylidene, and the like, but the present disclosure is not limited thereto.

In addition, the term "acetal," as used in the present disclosure, refers to an organic group formed by a bond of alcohol and aldehyde, that is, a substituent with two ether (-OR) bonds on one carbon atom, and includes methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(secondary-butoxy)ethoxy, 1-(tertiary-butoxy)ethoxy, 1-(cyclohexyloxy) ethoxy, 1-methoxy-1-methylmethoxy, 1-methoxy-1-methylethoxy, and the like, but the present disclosure is not limited thereto.

In addition, the term "ether," as used in the present disclosure, refers to an organic group having at least one ether bond (-O-), and includes 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like, but the present disclosure is not limited thereto.

In addition, the term "silyl," as used in the present disclosure, refers to a $-SiH_3$ radical derived from silane, and at least one of hydrogen atoms in the silyl group may be substituted with various organic groups such as alkyl and halogen, and specifically, includes trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimeroxysilyl, ethyldiethoxysilyl, triethoxysilyl, vinyldimethoxysilyl, triphenoxysilyl, and the like, but the present disclosure is not limited thereto.

In addition, the term "alkoxy," as used in the present disclosure, refers to an -O-alkyl radical, where 'alkyl' is as defined above. Examples of such alkoxy radicals include, methoxy, ethoxy, propoxy, isopropoxy, butoxy, isobutoxy, t-butoxy, and the like, but the present disclosure is not limited thereto.

In addition, the term "halogen," as used in the present disclosure, refers to a fluorine, chlorine, bromine or iodine atom.

In addition, the term "Cn" described in the present disclosure means n carbon atoms.

The present disclosure provides an ethylene alpha-olefin copolymer that has high processability and thermal stability after processing without additional processes such as adding additives for crosslinking.

The ethylene alpha-olefin copolymer according to the present disclosure has two melting temperature (Tm) peaks when measured by differential scanning calorimetry (DSC) and has high zero shear viscosity.

As will be described later, the ethylene alpha-olefin copolymer according to the present disclosure is polymerized under a catalyst composition containing the R type and S type of the transition metal compound, and thus, the melting temperature (Tm) peak may include first melting temperature and second melting temperature peaks that are different from each other. In this manner, when the ethylene alpha-olefin copolymer has two melting temperature peaks, the melting behavior of the polymer changes over a wide temperature range, and thus extensional viscosity increases and processability may be improved.

Preferably, the first melting temperature peak may exist at 30°C or higher and 100°C or lower, and the second melting temperature peak may exist at higher than 100°C and 120°C or lower.

In the present disclosure, the ethylene alpha-olefin copolymer may have a zero shear viscosity of 10,000 Pa·s or more, and as a result, the melt strength and thermal stability of the polymer increase, allowing the polymer to be processed stably. In particular, there is an advantage that an ethylene alpha-olefin copolymer with a sufficiently high zero shear viscosity may be produced without adding additives such as peroxide or the like for crosslinking.

To quantify the long chain branch (LCB) content of the ethylene alpha-olefin copolymer according to the present disclosure, the strength factor may be measured using Equation 1 below. Since Equation 1 includes a weight average molecular weight factor, the LCB content of ethylene alpha-olefin copolymers with various molecular weights may be objectively predicted using Equation 1 below.

$$\text{Strength factor} = Mw/10^4 + 5/(Mw/10^5) * \exp(\text{extensional viscosity increase ratio}) \quad \text{[Equation 1]}$$

In Equation 1 above, Mw is the weight average molecular weight of the ethylene alpha-olefin copolymer, and the rate of increase in extensional viscosity is obtained as, for the ethylene alpha-olefin copolymer, the highest extensional viscosity value measured at 170°C at a Hencky strain rate of 1 $s^{-1}$ using an extensional viscosity device attached to an ARES rheometer is divided by the value of the extensional viscosity of the extrapolated straight line at the time at which the highest extensional viscosity value was obtained. In this case, the extrapolated straight line is a straight line provided by extending a straight line with an average slope in a section where the extensional viscosity increases uniformly over time, to a section where the extensional viscosity increases rapidly while maintaining the average slope (see FIG. 2).

Preferably the ethylene alpha-olefin copolymer according to the present disclosure may have a strength factor of 50 or more as measured according to Equation 1.

In Formula 1, the weight average molecular weight (Mw) of the ethylene alpha-olefin copolymer may be 10,000

to 1,000,000 g/mol, preferably 50,000 to 800,000 g/mol, and more preferably 230,000 to 500,000 g/mol.

Additionally, in Equation 1, the rate of increase in extensional viscosity of the ethylene alpha-olefin copolymer may be 2 or more. In general, ethylene alpha-olefin copolymers polymerized under a catalyst containing a transition metal compound without isomers tend to have a constant increase in extensional viscosity over time and have a low rate of increase in extensional viscosity. However, the ethylene alpha-olefin copolymer according to the present disclosure exhibits strain hardening in which the extensional viscosity increases steadily and then increases rapidly after a certain time point, and when considering this, it can be expected to show improved processability compared to ethylene alpha-olefin copolymers of the related art. The upper limit of the rate of increase in extensional viscosity of the ethylene alpha-olefin copolymer is not particularly limited, but is preferably 5 or less to maintain sufficient mechanical strength.

The ethylene alpha-olefin copolymer according to the present disclosure satisfies the above-mentioned physical properties and at the same time may exhibit similar physical properties to the ethylene alpha-olefin copolymer polymerized under a catalyst containing a transition metal compound that does not have isomers.

Preferably, the ethylene alpha-olefin copolymer according to the present disclosure may exhibit a density of 0.850 to 0.920 g/mL and a melt index (MI) of 0.1 to 40 g/10min.

Additionally, the ethylene alpha-olefin copolymer according to the present disclosure may exhibit a molecular weight distribution (Mw/Mn) of 1 to 10, preferably 1.5 to 8, and more preferably 1.5 to 6.

The ethylene alpha-olefin copolymer according to the present disclosure is produced by copolymerization of ethylene and alpha-olefin, and the alpha-olefin may be a $C_3$-$C_{12}$, or $C_3$-$C_8$ aliphatic olefin. More specifically, the alpha-olefin may be propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene or 3,4-dimethyl-1-hexene, etc., and any one thereof or a mixture of two or more thereof may be used.

The ratio of ethylene and alpha-olefin added to the reactor during polymerization is not particularly limited, but it is preferable that ethylene:alpha-olefin is added at a weight ratio of 1:0.5 to 1:1.3. When ethylene and alpha-olefin are added in the above weight ratio, an olefin copolymer having a high molecular weight and a high comonomer content may be obtained.

Polymerization of ethylene and alpha-olefin may be performed under a catalyst composition containing R-type and S-type transition metal compounds represented by the following formula 1.

[Formula 1]

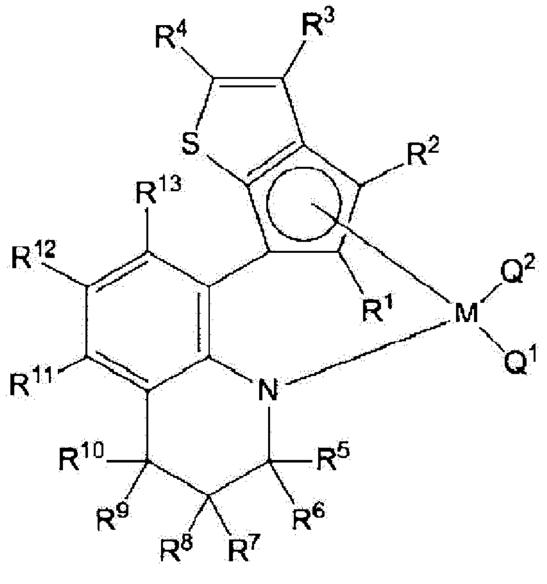

In Formula 1 above,

M is a group 4 transition metal;

$Q^1$ and $Q^2$ are each independently halogen, ($C_1$-$C_{20}$) alkyl, ($C_2$-$C_{20}$)alkenyl, ($C_2$-$C_{20}$)alkynyl, ($C_6$-$C_{20}$)aryl, ($C_1$-$C_{20}$) alkyl ($C_6$-$C_{20}$)aryl, ($C_6$-$C_{20}$)aryl ($C_1$-$C_{20}$)alkyl, ($C_1$-$C_{20}$) alkylamido, ($C_6$-$C_{20}$)arylamido or ($C_1$-$C_{20}$)alkylidene;

$R^1$, $R^2$, $R^3$, $R^4$, $R^5$, $R^6$, $R^7$, $R^8$, $R^9$ and $R^{10}$ are each independently hydrogen; ($C_1$-$C_{20}$)alkyl with or without acetal,

ketal or ether groups; $(C_2-C_{20})$alkenyl with or without acetal, ketal or ether groups; $(C_1-C_{20})$alkyl $(C_6-C_{20})$aryl with or without acetal, ketal or ether groups; $(C_6-C_{20})$aryl $(C_1-C_{20})$alkyl with or without acetal, ketal or ether groups; or $(C_1-C_{20})$silyl with or without acetal, ketal or ether groups; $R^1$ and $R^2$ may be connected to each other to form a ring, and $R^3$ and $R^4$ may be connected to each other to form a ring, and two or more of $R^5$ to $R^{10}$ may be connected to each other to form a ring;

$R^{11}$, $R^{12}$ and $R^{13}$ are each independently hydrogen; $(C_1-C_{20})$ alkyl with or without acetal, ketal or ether groups; $(C_2-C_{20})$ alkenyl with or without acetal, ketal or ether groups; $(C_1-C_{20})$alkyl $(C_6-C_{20})$aryl with or without acetal, ketal or ether groups; $(C_6-C_{20})$aryl $(C_1-C_{20})$alkyl with or without acetal, ketal or ether groups; $(C_1-C_{20})$ silyl with or without acetal, ketal or ether groups; $(C_1-C_{20})$alkoxy; or $(C_6-C_{20})$aryloxy; $R^{11}$ and $R^{12}$ may be connected to each other to form a ring, and $R^{12}$ and $R^{13}$ may be connected to each other to form a ring.

The transition metal compound represented by Formula 1 contains ligands with new structures in which the amido ligand and ortho-phenylene form a condensed ring, and the pentagonal ring pi-ligand bonded to the ortho-phenylene is fused by a thiophene heterocycle. Accordingly, the transition metal compound has the advantage of having a high copolymerization activity of ethylene and alpha-olefin, compared to the transition metal compound in which the thiophene hetero ring is not fused.

According to the present disclosure, in the transition metal compound represented by Formula 1, the $R^1$, $R^2$, $R^3$, $R^4$, $R^5$, $R^6$, $R^7$, $R^8$, $R^9$, $R^{10}$, $R^{11}$, $R^{12}$ and $R^{13}$ may each be independently substituted with a substituent containing an acetal, ketal or ether group, and when substituted with the above substituents, it may be more advantageous to support the transition metal compound on the surface of the carrier.

In addition, in the transition metal compound represented by Formula 1, M may be titanium (Ti), zirconium (Zr), or hafnium (Hf).

In addition, in the transition metal compound represented by Formula 1, it may be preferable that $Q^1$ and $Q^2$ are each independently halogen or $(C_1-C_{20})$alkyl, and more preferably chlorine or methyl.

In addition, in the transition metal compound represented by Formula 1, $R^1$, $R^2$, $R^3$, $R^4$, and $R^5$ may each independently be hydrogen or $(C_1-C_{20})$alkyl, and preferably may each independently be hydrogen or methylyl. More preferably, $R^1$, $R^2$, $R^3$, $R^4$, and $R^5$ may each independently be hydrogen or methyl, but at least one of $R^3$ and $R^4$ may be methyl, and $R^5$ may be methyl.

In addition, in the transition metal compound represented by Formula 1, the $R^6$, $R^7$, $R^8$, $R^9$, $R^{10}$, $R^{11}$, $R^{12}$ and $R^{13}$ are each preferably hydrogen.

The transition metal compound represented by Formula 1 preferably contains the above substituents to control the electronic and steric environment around the metal.

In the present disclosure, the catalyst composition may further include a cocatalyst compound. The cocatalyst compound activates the catalyst compound, and an aluminoxane compound, an organo-aluminum compound, a bulky compound that activates the catalyst compound, or the like may be used. Specifically, the cocatalyst compound may be selected from the group consisting of compounds represented by the following formulas 2 to 4.

[Formula 2] $-[Al(Ra)-O]_n-$

In Formula 2 above,

Ra is each independently halogen; or a $(C_1-C_{20})$ hydrocarbyl group substituted or unsubstituted with halogen, and n is an integer greater than or equal to 2.

[Formula 3] $Q(Rb)_3$

In Formula 3 above,

Q is aluminum or boron, and
Rb is each independently halogen; or a $(C_1-C_{20})$ hydrocarbyl group substituted or unsubstituted with halogen.

[Formula 4] $[W]^+[Z(Rc)_4]^-$

In Formula 4 above,

$[W]^+$ is a cationic Lewis acid; or a cationic Lewis acid with a hydrogen atom bonded thereto,
Z is a group 13 element, and
Rc is each independently ($C_6$-$C_{20}$)aryl group substituted with one or two or more substituents selected from the group consisting of halogen, ($C_1$-$C_{20}$)hydrocarbyl group, alkoxy group, and phenoxy group; a ($C_1$-$C_{20}$)alkyl group substituted with one or two or more substituents selected from the group consisting of halogen, ($C_1$-$C_{20}$)hydrocarbyl group, alkoxy group, and phenoxy group.

The cocatalyst compound is included in a catalyst together with the transition metal compound represented by Formula 1 and serves to activate the transition metal compound. Specifically, in order for the transition metal compound to become an active catalyst component used in olefin polymerization, while extracting a ligand from a transition metal compound and cationizing the central metal ($M^1$ or $M^2$), the compound containing a unit represented by Formula 2, the compound represented by Formula 3 and the compound represented by Formula 4, which may act as a counterion with weak binding force, that is, an anion, act together as cocatalysts.

The 'unit' represented by Formula 2 is a structure in which n structures within [ ] are connected within the compound, and if it contains the unit represented by Formula 2, other structures in the compound are not particularly limited, and it may be a cluster-type, for example, spherical compound in which the repeating units of Formula 2 are linked to each other.

In order for the cocatalyst compound to exhibit a better activation effect, the compound represented by Formula 2 is not particularly limited as long as it is an alkylaluminoxane, but preferred examples include methylaluminoxane, ethylaluminoxane, isobutylaluminoxane, butylaluminoxane, etc., and a particularly preferred compound is methylaluminoxane.

In addition, the compound represented by Formula 3 is an alkyl metal compound and is not particularly limited, and non-limiting examples thereof include trimethyl aluminum, triethylaluminum, triisobutyl aluminum, tripropyl aluminum, tributyl aluminum, dimethylchloroaluminum, triisopropyl aluminum, tri-s-butyl aluminum, tricyclopentyl aluminum, tripentyl aluminum , triisopentyl aluminum, trihexyl aluminum, trioctyl aluminum, ethyldimethyl aluminum, methyldiethyl aluminum, triphenyl aluminum, tri-p-tolyl aluminum, dimethyl aluminum methoxide, dimethyl aluminum ethoxide, trimethyl boron, triethyl boron, triisobutyl boron, tripropyl boron, tributyl boron, etc. Considering the activity of the transition metal compound, one or two or more types selected from the group consisting of trimethyl aluminum, triethyl aluminum and triisobutyl aluminum may preferably be used.

Considering the activation of the transition metal compound, the compound represented by Formula 4, when $[W]^+$ is a cationic Lewis acid to which a hydrogen atom is bonded, it is a dimethylanilinium cation, and when $[W]^+$ is a cationic Lewis acid, it is $[(C_6H_5)_3C]^+$, and $[Z(Rc)_4]^-$ may be preferably $[B(C_6F_5)_4]^-$.

The compound represented by Formula 4 is not particularly limited, but a non-limiting example where $[W]^+$ is a cationic Lewis acid to which a hydrogen atom is bonded may be triphenylcarbenium borate, trimethylammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyclo octadecylammonium tetraphenylborate, N,N-dimethylanilium tetraphenylborate, N,N-diethylanilinium tetraphenylborate, N,N-dimethyl(2,4,6-trimethylanilinium)tetraphenylborate, trimethylammonium tetrakis(pentafluorophenyl)borate, methylditetradecylammonium tetrakis(pentaphenyl)borate, methyldioctadecylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N-dimethyl(2,4,6-trimethylanilinium)tetrakis(pentafluorophenyl) borate, trimethylammonium tetrakis (2,3,4,6-tetrafluorophenyl) borate, triethylammonium tetrakis (2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-(2,4,6-trimethylanilinium)tetrakis-(2,3,4,6-tetrafluorophenyl)borate, dioctadecylammonium tetrakis(pentafluorophenyl)borate, ditetradecylammonium tetrakis(pentafluorophenyl)borate, dicyclohexylammonium tetrakis(pentafluorophenyl)borate, triphenylphosphonium tetrakis(pentafluorophenyl)borate, methyldioctadecylphosphonium tetrakis(pentafluorophenyl)borate, tri(2,6-dimethylphenyl)phosphonium tetrakis(pentafluorophenyl)borate, methyldi (octadecyl) ammonium tetrakis(pentafluorophenyl)borate, methyldi(tetradecyl)-ammonium tetrakis(pentafluorophenyl)borate, trityl tetrakis(pentafluorophenyl)borate etc.

The catalyst may be prepared using the compounds of Formula 1 to Formula 4, and in this case, the method exemplified below may be used to prepare the catalyst.

First, when $Q^1$ and $Q^2$ of the transition metal compound represented by Formula 1 are halogens, there is a method of contacting the compound represented by Formula 2. Second, if $Q^1$ and $Q^2$ in Formula 1 are alkyl radicals, a catalyst may be prepared by contacting a mixture of a transition metal compound and the compounds represented by Formulas 3 and 4, or may also be produced by respectively, directly adding the compounds represented by Formulas

3 and 4 to the polymerization reactor.

The amount of the cocatalyst compound added may be determined by considering the amount of the transition metal compound represented by Formula 1 and the amount necessary to sufficiently activate the transition metal compound. The content of the cocatalyst compound may be 1:1 to 100,000 based on the molar ratio of the metal contained in the cocatalyst compound, with respect to 1 mole of the transition metal contained in the transition metal compound represented by Formula 1, and preferably, may be 1:1 to 10,000, more preferably 1:1 to 5,000.

More specifically, in the case of the first method, the compound represented by Formula 2 may be included in a molar ratio of preferably 1:10 to 5,000, more preferably 1:50 to 1,000, and most preferably 1:100 to 1,000 with respect to the transition metal compound represented by Formula 1. If the molar ratio of the compound represented by Formula 2 to the transition metal compound of Formula 1 is less than 1:10, the amount of aluminoxane is so small and thus, a problem may occur in which activation of the transition metal compound cannot proceed completely, and if the ratio exceeds 1:5,000, an excess amount of aluminoxane may act as a catalyst poison and the polymer chain may not grow well.

In the case of the second method above, when A of the cocatalyst compound represented by Formula 3 is boron, it may be included in a molar ratio of 1:1 to 100, preferably 1:1 to 10, and more preferably 1:1 to 3, relative to the transition metal compound represented by Formula 1. In addition, when A of the cocatalyst compound represented by Formula 3 is aluminum, it may vary depending on the amount of water in the polymerization system, but may be included in a molar ratio of 1:1 to 1000, preferably 1:1 to 500, and more preferably 1:1 to 100, relative to the transition metal compound represented by Formula 1.

In addition, the cocatalyst compound represented by Formula 4 may be included in a molar ratio of 1:0.5 to 30, preferably 1:0.7 to 20, and more preferably 1:1 to 10 with respect to the transition metal compound represented by Formula 1. If the ratio of the cocatalyst compound represented by Formula 4 is less than 1:0.5, the amount of activator is relatively small and the metal compound cannot be completely activated, which may lead to a problem in that the activity of the resulting catalyst composition decreases. If it exceeds 1:30, the metal compound is fully activated, but the remaining excess activator may cause problems such as the unit cost of the catalyst composition being uneconomical or the purity of the polymer produced being low.

Meanwhile, the catalyst composition of the present disclosure containing the transition metal compound and the cocatalyst compound may further include a carrier. In this case, the carrier may be any carrier made of inorganic or organic materials used in the production of catalysts in the technical field to which the present disclosure pertains, without limitation.

According to the present disclosure, the carrier may be $SiO_2$, $Al_2O_3$, MgO, $MgCl_2$, $CaCl_2$, $ZrO_2$, $TiO_2$, $B_2O_3$, CaO, ZnO, BaO, $ThO_2$, $SiO_2$-$Al_2O_3$, $SiO_2$-MgO, $SiO_2$-$TiO_2$, $SiO_2$-$V_2O_5$, $SiO_2$-$Cr_2O_3$, $SiO_2$-$TiO_2$-MgO, bauxite, zeolite, starch, cyclodextrin, or synthetic polymer.

Preferably, the carrier contains a hydroxy group on the surface and may be one or more types selected from the group consisting of silica ($SiO_2$), silica-alumina ($SiO_2$-$Al_2O_3$), and silica-magnesia ($SiO_2$-MgO).

As a method of supporting a catalyst containing the transition metal compound and the cocatalyst compound on the carrier, a method of directly supporting the transition metal compound on a dehydrated carrier; a method of pretreating the carrier with the cocatalyst compound and then supporting the transition metal compound; a method of supporting the transition metal compound on the carrier and then post-treating the same with the cocatalyst compound; a method of reacting the transition metal compound with the cocatalyst compound and then adding the carrier for reaction, or the like, may be used.

The solvent that may be used in the above supporting method may be an aromatic hydrocarbon-based solvent, an aromatic hydrocarbon-based solvent, a halogenated aliphatic hydrocarbon-based solvent, or a mixture thereof.

Non-limiting examples of the aliphatic hydrocarbon-based solvent may include pentane, hexane, heptane, octane, nonane, decane, undecane, dodecane, or the like.

Non-limiting examples of the aromatic hydrocarbon-based solvent may include benzene, monochlorobenzene, dichlorobenzene, trichlorobenzene, toluene, or the like.

Non-limiting examples of the halogenated aliphatic hydrocarbon-based solvent may include dichloromethane, trichloromethane, dichloroethane, trichloroethane, or the like.

In addition, it is advantageous in terms of efficiency of the supporting process that the supporting method is carried out at a temperature of -70 to 200°C, preferably -50 to 150°C, more preferably 0 to 100°C.

Meanwhile, in the present disclosure, the ethylene alpha-olefin copolymer produced through a polymerization process performed by directly contacting ethylene and alpha-olefin comonomer compounds may be prepared by polymerization of monomers under conditions in which the catalytic sites are relatively insoluble and/or immobilized so that the polymer chains are rapidly immobilized according to these information. This immobilization may be performed, for example, by using a solid insoluble catalyst, by carrying out the polymerization in a medium in which the resulting polymer is generally insoluble, and by maintaining the polymerization reactants and products at the crystallization temperature ($T_c$) or lower of the polymer.

The above-mentioned catalyst may be preferably applied to the copolymerization of ethylene and alpha-olefin.

Hereinafter, a method of preparing an ethylene alpha-olefin copolymer will be described, including the operation of copolymerizing ethylene and alpha-olefin in the presence of the catalyst.

Processes of polymerizing ethylene alpha-olefin copolymers are well known in the art and include bulk polymerization, solution polymerization, slurry polymerization, and low pressure gas phase polymerization. Metallocene catalysts are particularly useful in known forms of operation using fixed bed, moving bed or slurry processes carried out in single, series or parallel reactors.

When the polymerization reaction is carried out in a liquid or slurry phase, a solvent or propylene or ethylene monomer itself may be used as a medium.

Since the catalyst presented in the present disclosure exists in a uniform form within the polymerization reactor, it is preferable to apply the same to a solution polymerization process conducted at a temperature of the melting point or higher of the polymer. However, as disclosed in U.S. Patent No. 4,752,597, a heterogeneous catalyst composition form obtained by supporting the transition metal compound and cocatalyst on a porous metal oxide support may be used in slurry polymerization or gas phase polymerization processes. Therefore, if the catalyst of the present disclosure is used with an inorganic carrier or an organic polymer carrier, it may also be applied to slurry or gas phase processes. That is, the transition metal compound and cocatalyst compound may be used in the form of being supported on an inorganic carrier or an organic polymer carrier.

Solvents that may be used during the polymerization reaction may be aliphatic hydrocarbon-based solvents, aromatic hydrocarbon-based solvents, halogenated aliphatic hydrocarbon-based solvents, or mixtures thereof. In this case, a non-limiting example of the aliphatic hydrocarbon-based solvent may include butane, isobutane, pentane, hexane, heptane, octane, nonane, decane, undecane, dodecane, cyclopentane, methylcyclopentane, cyclohexane, etc. Also, a non-limiting example of the aromatic hydrocarbon-based solvent may include benzene, monochlorobenzene, dichlorobenzene, trichlorobenzene, toluene, xylene, chlorobenzene, etc. Also, a non-limiting example of the halogenated aliphatic hydrocarbon solvent may include dichloromethane, trichloromethane, chloroethane, dichloroethane, trichloroethane, 1,2-dichloroethane, etc.

As described above, the ethylene alpha-olefin copolymer according to the present disclosure may be prepared by polymerizing ethylene and alpha-olefin comonomer in the presence of the catalyst composition. At this time, the transition metal compound and cocatalyst component may be added separately to the reactor, or respective components may be mixed in advance and then added to the reactor, and there are no restrictions on mixing conditions such as input order, temperature, concentration or the like. For example, when preparing a copolymer of ethylene and 1-butene, 1-butene may be included in an amount of 0.1 to 99.9% by weight, preferably 1 to 75% by weight, and more preferably 5 to 50% by weight.

Meanwhile, the amount of the catalyst added in the polymerization reaction according to the present disclosure may be determined within a range where the polymerization reaction of the monomer may sufficiently occur depending on the slurry phase, liquid phase, gas phase, or solution process, and thus is not particularly limited. However, the amount of the catalyst added is preferably $10^{-8}$ to 1 mol/L based on the concentration of the central metal (M) in the transition metal compound per unit volume (L) of monomer, and is more preferably $10^{-7}$ to $10^{-1}$ mol/L, and even more preferably $10^{-7}$ to $10^{-2}$ mol/L.

In addition, the polymerization reaction in the present disclosure may be conducted as a batch type, semi-continuous type, or continuous type reaction, and may be preferably performed as a continuous reaction.

The temperature and pressure conditions for the polymerization reaction of the present disclosure may be determined considering the efficiency of the polymerization reaction depending on the type of reaction to be applied and the type of reactor, but the polymerization temperature may be 40 to 150°C, preferably 60 to 100°C, and the pressure may be 1 to 100 atm, preferably 5 to 50 atm.

Ethylene alpha-olefin copolymers having different ranges of melting temperatures are prepared under the catalyst composition according to the present disclosure. The ethylene alpha-olefin copolymer exhibits high zero shear viscosity and strength factor and has excellent processability and thermal stability after processing, compared to ethylene alpha-olefin copolymers of the related art with similar density and melt index (MI).

Mode for Invention

Hereinafter, embodiments of the present disclosure will be described in detail. The following examples are only for understanding of the present disclosure and do not limit the present disclosure.

Example

(1) Production of transition metal compounds

According to Scheme 1 below, a transition metal compound (CAT-1) used as a main catalyst was synthesized.

The detailed synthesis process is as follows.

[Scheme 1]

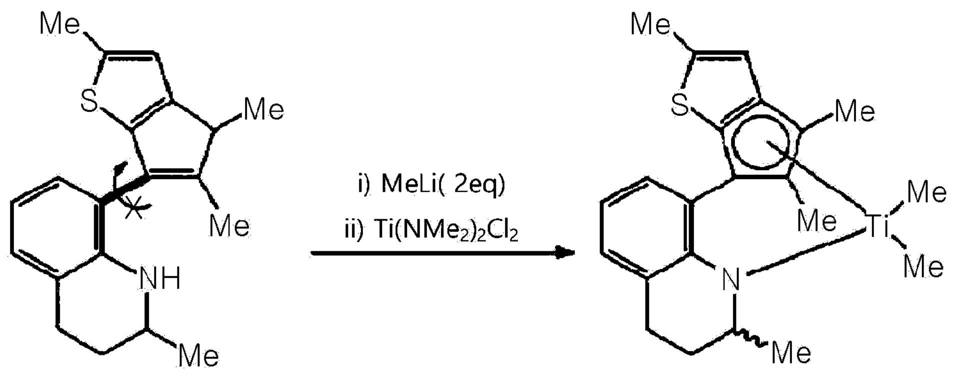


Compound (1) Compound (2)

First, methyllithium (1.63 g, 3.55 mmol, 1.6 M diethyl ether solution) was added dropwise to a diethyl ether solution (10 mL) in which compound (1) (0.58 g, 1.79 mmol) was dissolved at -30°C (i). The solution was stirred at room temperature overnight, and then the temperature was lowered to -30°C, and then, $Ti(NMe_2)_2Cl_2$(0.37 g, 1.79 mmol) was added all at once (ii). The solution was stirred for 3 hours and then all solvent was removed using a vacuum pump. The resulting solid was dissolved in toluene (8 mL), and then $Me_2SiCl_2$(1.16 g, 8.96 mmol) was added to this solution (iii). The solution was stirred at 80°C for 3 days and then, the solvent was removed using a vacuum pump. As a result, a red solid compound (2) was obtained (0.59 g, yield 75%).

Through the $^1H$ NMR spectrum, it was confirmed that the two stereo compounds exist in a ratio of 2:1.

$^1H$ NMR ($C_6D_6$): $\delta$ 7.10 (t, J = 4.4 Hz, 1H), 6.90 (d, J = 4.4 Hz, 2H), 5.27 and 5.22 (m, 1H, NCH), 2.54-2.38 (m, 1H, $CH_2$), 2.20-2.08 (m, 1H, $CH_2$), 2.36 and 2.35 (s, 3H), 2.05 and 2.03 (s, 3H), 1.94 and 1.93 (s, 3H), 1.89 and 1.84 (s, 3H), 1.72-1.58 (m, 2H, $CH_2$), 1.36-1.28 (m, 2H, $CH_2$), 1.17 and 1.14 (d, J = 6.4, 3H, $CH_3$) ppm.

$^{13}C\{^1H\}$ NMR ($C_6D_6$): 162.78, 147.91, 142.45, 142.03, 136.91, 131.12, 130.70, 130.10, 128.90, 127.17, 123.39, 121.33, 119.87, 54.18, 26.48, 21.74, 17.28, 14.46, 14.28, 13.80, 13.27 ppm.

(2) Production of ethylene alpha-olefin copolymer

After replacing the interior of the high pressure reactor (internal capacity: 2L, stainless steel) with nitrogen at room temperature, 1 L of normal hexane and 2 mL of triisobutylaluminum were added. Subsequently, a comonomer (1-butene or 1-octene) was injected at the ratio shown in Table 1 below, based on 100 g of ethylene gas. Afterwards, the reactor temperature was preheated to 140°C, and a solution of dimethylanilinium tetrakis (pentablueorophenyl) borate cocatalyst (45.0 pmol) was mixed with the mixed solution of a transition metal compound (5) (1.5 $\mu$mol) and triisobutyl aluminum (187.5 pmol) synthesized in the above preparation example, and injected into the reactor, and then, polymerization reaction was performed for 5 minutes.

When the polymerization reaction was completed, the reaction was terminated using ethanol diluted with 10% HCl, and then the temperature was lowered to room temperature, and then, excess gas was discharged. Next, the copolymer polymerization solution dispersed in the solvent was transferred to a container and then dried in a vacuum oven at 80°C for 15 hours or more to prepare an ethylene alpha-olefin copolymer.

Comparative Example

Except for using [(1,2,3,4-tetrahydroquinolin-8-yl)tetramethylcyclopentadienyl-N]titanium dimethyl(CAT-2), which does not form isomers as a transition metal compound, ethylene alpha-olefin copolymer was prepared in the same manner as in the example.

[Table 1]

| | Catalyst | Comonomer Type | Comonomer/Ethylene (weight ratio) |
|---|---|---|---|
| Example 1 | CAT-1 | 1-butene | 1.4 |
| Example 2 | CAT-1 | 1-butene | 1.2 |
| Example 3 | CAT-1 | 1-butene | 1.0 |
| Example 4 | CAT-1 | 1-butene | 0.8 |
| Example 5 | CAT-1 | 1-octene | 1.2 |
| Example 6 | CAT-1 | 1-octene | 1.0 |
| Example 7 | CAT-1 | 1-octene | 0.8 |
| Comparative Example 1 | CAT-2 | 1-butene | 1.4 |
| Comparative Example 2 | CAT-2 | 1-butene | 1.2 |
| Comparative Example 3 | CAT-2 | 1-butene | 1.0 |
| Comparative Example 4 | CAT-2 | 1-butene | 0.8 |
| Comparative Example 5 | CAT-2 | 1-octene | 1.2 |
| Comparative Example 6 | CAT-2 | 1-octene | 1.0 |
| Comparative Example 7 | CAT-2 | 1-octene | 0.8 |

Physical property analysis of ethylene alpha-olefin copolymer

The physical properties of the ethylene alpha-olefin copolymers prepared in Examples and Comparative Examples were measured and listed in Tables 2 and 3. The strength factors of ethylene alpha-olefin copolymers are shown in FIG. 1.

(1) Comonomer content in the copolymer: Measured at 100°C using tetrachloroethane-d2 solvent using NMR (device name: Ascend 400, manufacturer: Bruker) spectral analysis at 400 MHz.
(2) Weight average molecular weight (Mw) and molecular weight distribution (MWD): Measured by GPC (Gel Permeation Chromatography, device name: PL-GPC220, manufacturer: Agilent) analysis method at 160°C using 1,2,4-trichlorobenzene solvent.
(3) Density: A sheet with a thickness of 3 cm and a radius of 2 cm was manufactured using a 190°C press mold, cooled at 10°C/min, and measured on a Mettler scale.
(4) Melt index (MI): Measured with an instrument (manufacturer: Mirage, model name: SD-120L) by applying the ASTM D-1238 (condition E, 190°C, 2.16 kg load) method.
(5) Melting point (Tm) and calorific value (ΔH): Obtained using a differential scanning calorimeter (DSC: Differential Scanning Calorimeter 2920) manufactured by TA. DSC was measured by a method of reaching equilibrium at 0°C and then increasing the temperature by 10°C per minute to 200°C, and then decreasing by 10°C per minute to -90°C, and then increasing the temperature by 10°C per minute up to 200°C. The melting point is obtained by taking the area apex of the endothermic curve during the second temperature rise.
(6) Zero shear viscosity: Analysis was conducted at 190°C using an ARES rheometer, and zero shear viscosity was obtained by curve fitting using the Carreau-Yasuda (CY) empirical model.

$$|\eta^*(\omega)| = \frac{\eta_0}{[1+(\tau_\eta \omega)^a]^{(1-n)/a}}$$

$\eta^*(\omega)$ : Viscosity
$\eta_0$: zero shear viscosity
$\tau_\eta$: stress relaxation time
$\omega$: shear rate
$\alpha$: material constant

n: shear thinning index

(7) Extensional viscosity increase rate: It is a value obtained by dividing the highest extensional viscosity value measured at 170°C at a Hencky strain of $1s^{-1}$ using an extensional viscosity device attached to an ARES rheometer, by the value of the extensional viscosity of the extrapolated straight line at the time at which the highest extensional viscosity value was obtained.

(8) Strength Factor: The strength factor was obtained by substituting the weight average molecular weight and extensional viscosity increase rate of the ethylene alpha-olefin copolymer into Equation 1 below.

$$\text{Strength factor} = Mw/10^4 + 5/(Mw/10^5) * \exp(\text{extensional viscosity increase rate}) \quad \text{[Equation 1]}$$

(In Equation 1 above, Mw is the weight average molecular weight of the ethylene alpha-olefin copolymer, and the rate of increase in extensional viscosity is a value obtained by dividing the highest extensional viscosity value measured at 170°C at a Hencky strain rate of 1 $s^{-1}$ using an extensional viscosity device attached to an ARES rheometer, for the ethylene alpha-olefin copolymer, by the value of extensional viscosity of the extrapolated straight line at the time at which the highest extensional viscosity value was obtained. In this case, the extrapolated straight line is a straight line provided by extending a straight line with an average slope in a section where the extensional viscosity increases uniformly over time to a section where the extensional viscosity increases rapidly while maintaining the average slope.)

[Table 2]

| | Comonomer Type | Comonomer Content (weight%) | Mw (g/mol) | MWD | Density (g/ml) | MI (g/ 10min ) |
|---|---|---|---|---|---|---|
| Exampl e 1 | 1-butene | 38.4 | 108,400 | 2.1 | 0.863 | 1.1 |
| Exampl e 2 | 1-butene | 33.6 | 76, 900 | 2.2 | 0.865 | 5.1 |
| Exampl | 1-butene | 30.0 | 110,115 | 2.1 | 0.870 | 1.2 |
| e 3 | | | | | | |
| Exampl e 4 | 1-butene | 19.1 | 95,905 | 2.2 | 0.884 | 1.1 |
| Exampl e 5 | 1-octene | 34.6 | 142,700 | 2.4 | 0.870 | 1.0 |
| Exampl e 6 | 1-octene | 36.1 | 84, 760 | 2.2 | 0.870 | 5.0 |
| Exampl e 7 | 1-octene | 18.3 | 89, 692 | 2.7 | 0.901 | 1.2 |
| Compar ative Exampl e 1 | 1-butene | 32.2 | 90,280 | 2.6 | 0.862 | 1.2 |
| Compar ative Exampl e 2 | 1-butene | 26.4 | 70, 953 | 2.4 | 0.865 | 5.0 |
| Compar ative Exampl e 3 | 1-butene | 24.6 | 104, 000 | 2.3 | 0.870 | 1.1 |
| Compar ative Exampl e 4 | 1-butene | 20.3 | 116, 820 | 1.9 | 0.885 | 1.2 |
| Compar ative Exampl e 5 | 1-octene | 35.0 | 111,506 | 2.3 | 0.870 | 1.1 |
| Compar ative Exampl e 6 | 1-octene | 36.3 | 85,948 | 2.5 | 0.870 | 5.0 |
| Compar ative Exampl e 7 | 1-octene | 16.5 | 100,800 | 2.2 | 0.903 | 1.2 |

[Table 3]

| | Tm1 (°C) | Tm2 (°C) | ΔH (J/g) | Zero Shear Viscosity (Pa·s) | Extensional Viscosity Increase Ratio | Strength Factor |
|---|---|---|---|---|---|---|
| Exampl e 1 | 38.5 | 113.2 | 23.9 | 11,000 | 2.20 | 52.5 |
| Exampl e 2 | 49.7 | 111.0 | 41.1 | 32,000 | 2.18 | 65.5 |
| Exampl e 3 | 55.3 | 114.0 | 48.9 | 11,000 | 2.21 | 52.4 |
| Exampl | 73.7 | 110.9 | 81.3 | 18,000 | 2.56 | 77.3 |

(continued)

| | Tm1 (°C) | Tm2 (°C) | ΔH (J/g) | Zero Shear Viscosity (Pa·s) | Extensional Viscosity Increase Ratio | Strength Factor |
|---|---|---|---|---|---|---|
| e 4 | | | | | | |
| Exampl e 5 | 66.0 | 113.4 | 39.4 | 13,000 | 2.68 | 65.2 |
| Exampl e 6 | 57.3 | 110.9 | 62.3 | 29, 000 | 2.30 | 67.3 |
| Exampl e 7 | 93.2 | 104.2 | 116.2 | 21,000 | 2.80 | 100.6 |
| Compar ative Exampl e 1 | 28.0 | - | 38.6 | 3,400 | 0.90 | 22.6 |
| Compar ative Exampl e 2 | 30.8 | - | 45.0 | 9, 700 | 0.91 | 24.7 |
| Compar ative Exampl e 3 | 38.6 | - | 45.9 | 3, 900 | 1.10 | 24.9 |
| Compar ative Exampl e 4 | 69.6 | - | 63.2 | 6, 500 | 1.67 | 34.5 |
| Compar ative | 52.5 | - | 49.9 | 4, 900 | 1.50 | 31.3 |
| Exampl e 5 | | | | | | |
| Compar ative Exampl e 6 | 50.5 | - | 61.5 | 8, 100 | 1.57 | 36.5 |
| Compar ative Exampl e 7 | 101.0 | - | 95.3 | 9, 600 | 1.43 | 30.9 |

Referring to Tables 2 and 3, it can be seen that the ethylene alpha-olefin copolymers prepared according to Examples 1 to 7 have two melting temperature peaks. In addition, it can be seen that the ethylene alpha-olefin copolymers prepared according to Examples 1 to 7 exhibit higher zero shear viscosity, extensional viscosity increase rate, and strength factor compared to the ethylene alpha-olefin copolymers having similar density and melt index (MI) prepared according to Comparative Examples 1 to 7.

## Claims

1. An ethylene alpha-olefin copolymer containing an ethylene structural unit and an alpha-olefin structural unit, the ethylene alpha-olefin copolymer comprising:
two melting temperature (Tm) peaks when measured by differential scanning calorimetry (DSC), and a zero shear viscosity of at least 10,000 Pa·s.

2. The ethylene alpha-olefin copolymer of claim 1, wherein a strength factor calculated by the following equation 1 is 50 or more, and

   an extensional viscosity increase ratio is 2 or more,

   $$\text{Strength factor} = Mw/10^4 + 5/(Mw/10^5) * \exp(\text{extensional viscosity increase rate}) \qquad \text{[Equation 1]}$$

   where in Equation 1 above, Mw is a weight average molecular weight of the ethylene alpha-olefin copolymer, and the extensional viscosity increase ratio is a value obtained by dividing a highest extensional viscosity value for the ethylene alpha-olefin copolymer measured at 170°C at a Hencky strain of 1 $s^{-1}$ using an extensional viscosity device attached to an ARES rheometer, by a value of extensional viscosity of an extrapolated straight line at a time at which the highest extensional viscosity value was obtained, wherein the extrapolated straight line is a straight line provided by extending a straight line having an average slope in a section in which the extensional viscosity increases uniformly over time to a section in which the extensional viscosity increases rapidly while maintaining the average slope.

3. The ethylene alpha-olefin copolymer of claim 1, wherein the melting temperature (Tm) peaks include a first melting temperature peak existing at 30°C or higher and 100°C or lower, and a second melting temperature peak existing at higher than 100°C and 120°C or lower.

**4.** A method of preparing an ethylene alpha-olefin copolymer according to any one of claims 1 to 3, comprising: polymerizing an ethylene monomer and an alpha-olefin monomer under a catalyst composition containing an R type and an S type of a transition metal compound represented by the following formula 1,

[Formula 1]

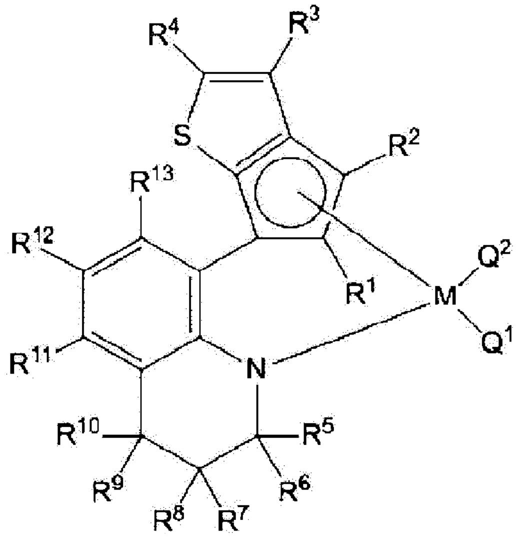

where in Formula 1 above,

M is a group 4 transition metal;
$Q^1$ and $Q^2$ are each independently halogen, $(C_1-C_{20})$alkyl, $(C_2-C_{20})$alkenyl, $(C_2-C_{20})$alkynyl, $(C_6-C_{20})$aryl, $(C_1-C_{20})$ alkyl $(C_6-C_{20})$aryl, $(C_6-C_{20})$aryl $(C_1-C_{20})$alkyl, $(C_1-C_{20})$ alkylamido, $(C_6-C_{20})$arylamido or $(C_1-C_{20})$alkylidene;
$R^1$, $R^2$, $R^3$, $R^4$, $R^5$, $R^6$, $R^7$, $R^8$, $R^9$ and $R^{10}$ are each independently hydrogen; $(C_1-C_{20})$alkyl with or without acetal, a ketal or an ether group; $(C_2-C_{20})$alkenyl with or without an acetal, a ketal or an ether group; $(C_1-C_{20})$alkyl $(C_6-C_{20})$aryl with or without an acetal, a ketal or an ether group; $(C_6-C_{20})$ aryl $(C_1-C_{20})$alkyl with or without an acetal, a ketal or an ether group; or $(C_1-C_{20})$silyl with or without an acetal, a ketal or an ether group; the $R^1$ and $R^2$ are connected to each other to form a ring, the $R^3$ and $R^4$ are connected to each other to form a ring, and two or more of $R^5$ to $R^{10}$ are connected to each other to form a ring; and
$R^{11}$, $R^{12}$ and $R^{13}$ are each independently hydrogen; $(C_1-C_{20})$ alkyl with or without acetal, a ketal or an ether group; $(C_2-C_{20})$alkenyl with or without an acetal, a ketal or an ether group; $(C_1-C_{20})$alkyl $(C_6-C_{20})$aryl with or without an acetal, a ketal or an ether group; $(C_6-C_{20})$aryl $(C_1-C_{20})$alkyl with or without an acetal, a ketal or an ether group; $(C_1-C_{20})$silyl with or without acetal, a ketal or an ether group; $(C_1-C_{20})$ alkoxy; or $(C_6-C_{20})$aryloxy; the $R^{11}$ and $R^{12}$ are connected to each other to form a ring, and the $R^{12}$ and $R^{13}$ are connected to each other to form a ring.

**5.** The method of preparing an ethylene alpha-olefin copolymer according to claim 4, wherein the $R^1$, $R^2$, $R^3$ and $R^4$ are each independently $(C_1-C_{20})$alkyl with or without an acetal, a ketal or an ether group, and
at least one of the $R^5$ and $R^6$ is each independently $(C_1-C_{20})$ alkyl with or without an acetal, a ketal or an ether group.

**6.** The method of preparing an ethylene alpha-olefin copolymer according to claim 4, wherein the catalyst composition further comprises a cocatalyst compound selected from the group consisting of compounds represented by the following formulas 2 to 4,

[Formula 2] $-[Al(Ra)-O]_n-$

where in Formula 2 above,

Ra is each independently halogen; or a $(C_1-C_{20})$ hydrocarbyl group substituted or unsubstituted with halogen, and

n is an integer greater than or equal to 2,

[Formula 3] $Q(Rb)_3$

where in Formula 3 above,

Q is aluminum or boron, and
Rb is each independently halogen; or a ($C_1$-$C_{20}$) hydrocarbyl group substituted or unsubstituted with halogen,

[Formula 4] $[W]^+[Z(Rc)_4]^-$

where in Formula 4 above,

$[W]^+$ is a cationic Lewis acid; or a cationic Lewis acid with a hydrogen atom bonded thereto,
Z is a group 13 element, and
Rc is each independently ($C_6$-$C_{20}$)aryl group substituted with one or two or more substituents selected from the group consisting of halogen, ($C_1$-$C_{20}$)hydrocarbyl group, alkoxy group, and phenoxy group; a ($C_1$-$C_{20}$)alkyl group substituted with one or two or more substituents selected from the group consisting of halogen, ($C_1$-$C_{20}$)hydrocarbyl group, alkoxy group, and phenoxy group.

FIG. 1:

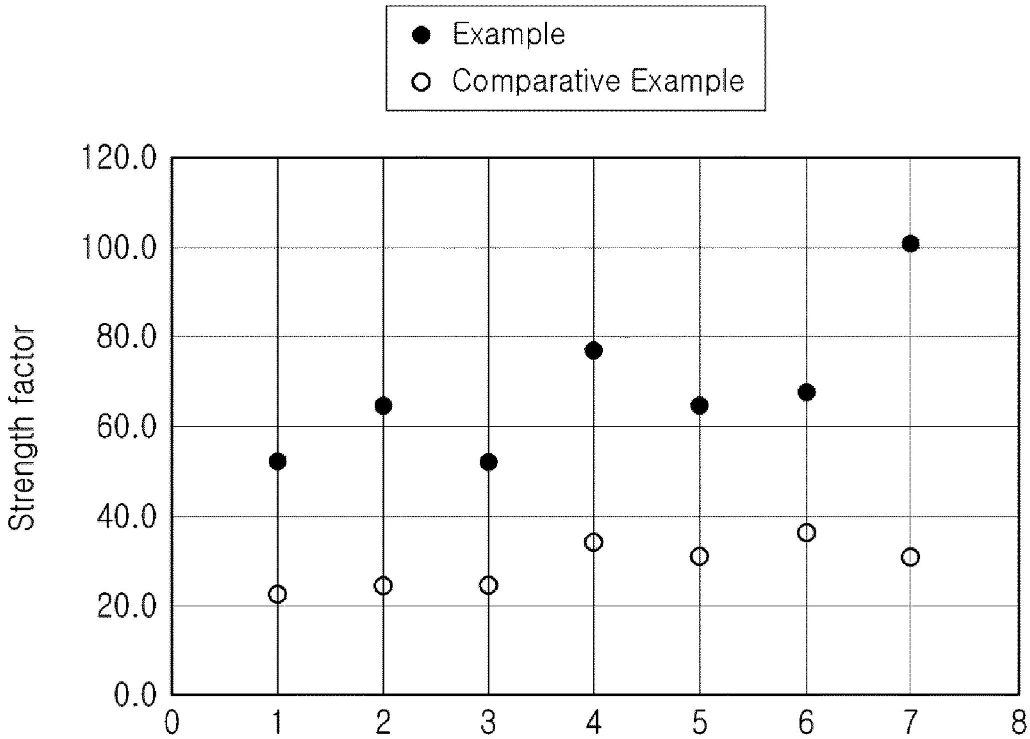
Example
Comparative Example
Strength factor
120.0
100.0
80.0
60.0
40.0
20.0
0.0
0
1
2
3
4
5
6
7
8

FIG. 2:

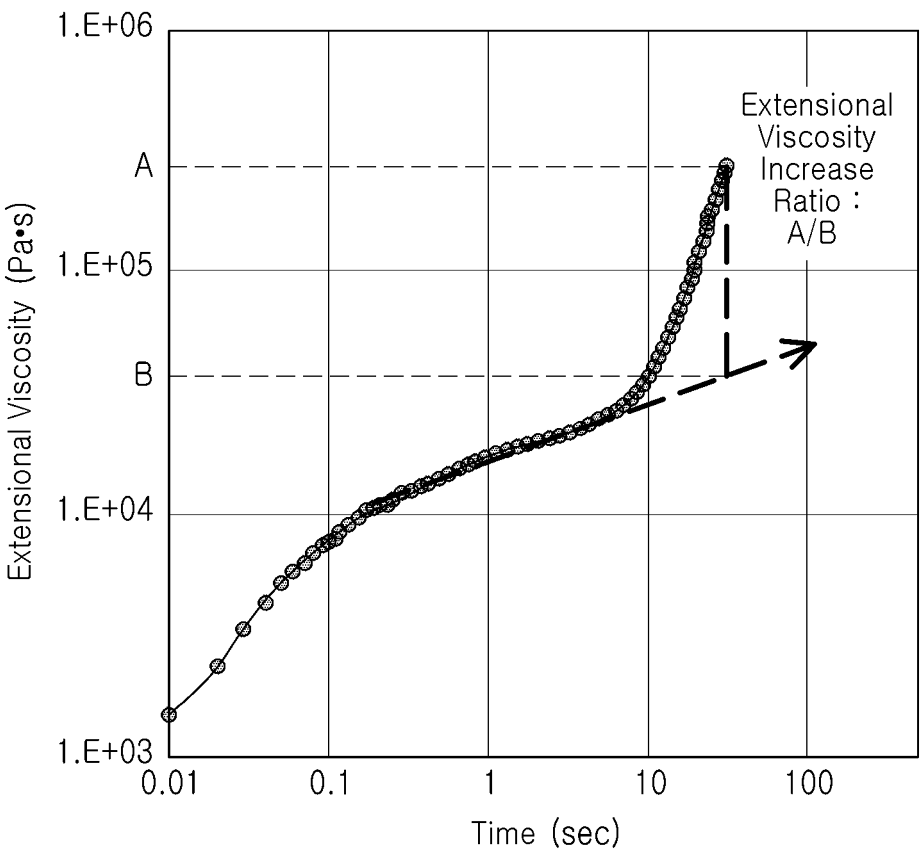
1.E+06
A
1.E+05
B
1.E+04
1.E+03
Extensional Viscosity (Pa•s)
0.01
0.1
1
10
100
Time (sec)
Extensional
Viscosity
Increase
Ratio :
A/B

## INTERNATIONAL SEARCH REPORT

International application No.
**PCT/KR2022/018707**

**A. CLASSIFICATION OF SUBJECT MATTER**

**C08F 210/16**(2006.01)i; **C08F 4/6592**(2006.01)i; **C08F 4/659**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/00(2006.01); C08F 110/02(2006.01); C08F 4/619(2006.01); C08F 4/649(2006.01); C08K 3/013(2018.01); C08L 23/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 에틸렌(ethylene), 알파올레핀(alpha-olefin), 공중합체(copolymer), 용융온도(melt point, melt temperature, Tm), 제로전단점도(zero-shear viscosity)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0034655 A (LG CHEM, LTD.) 03 April 2015 (2015-04-03)<br>See claims 1, 6, 7, 12-14 and 19; and paragraphs [0025], [0193], [0194], [0206]-[0208], [0214]-[0231] and [0256]. | 1-6 |
| X | KR 10-2021-0067264 A (LOTTE CHEMICAL CORPORATION) 08 June 2021 (2021-06-08)<br>See claims 1-5; and paragraphs [0115]-[0130]. | 1-6 |
| X | KR 10-2021-0067338 A (LOTTE CHEMICAL CORPORATION) 08 June 2021 (2021-06-08)<br>See claims 1-7. See paragraphs [0119]-[0133]. | 1-6 |
| X | KIM, S. H. et al. Preparation of thiophene-fused and tetrahydroquinoline-linked cyclopentadienyl titanium complexes for ethylene/α-olefin copolymerization. Catalysts. 2013, vol. 3, pp. 104-124.<br>See abstract; and pages 109, 110, 112-117, 119 and 120. | 1-6 |
| X | PARK, J. H. et al. Preparation of half-metallocenes of thiophene-fused and tetrahydroquinoline-linked cyclopentadienyl ligands for ethylene/α-olefin copolymerization. Dalton Transactions. 2010, vol. 39, pp. 9994-10002.<br>See abstract; and pages 9995-9997 and 9999-10001. | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2023** | **28 February 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/018707** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0031460 A (NOVA CHEMICALS (INTERNATIONAL) S. A.) 19 March 2021 (2021-03-19) See entire document. | 1-6 |

Form PCT/ISA/210 (second sheet) (July 2022)

**INTERNATIONAL SEARCH REPORT**
**Information on patent family members**

International application No.
**PCT/KR2022/018707**

| Patent document cited in search report | Publication date (day/month/year) | Patent family member(s) | Publication date (day/month/year) |
|---|---|---|---|
| KR 10-2015-0034655 A | 03 April 2015 | CN 104703994 A | 10 June 2015 |
| | | CN 104703994 B | 10 May 2017 |
| | | CN 105164139 A | 16 December 2015 |
| | | CN 105164139 B | 25 September 2018 |
| | | CN 105229039 A | 06 January 2016 |
| | | CN 105229039 B | 27 April 2018 |
| | | CN 105263940 A | 20 January 2016 |
| | | CN 105263940 B | 23 March 2018 |
| | | CN 109280119 A | 29 January 2019 |
| | | CN 109280119 B | 24 August 2021 |
| | | DE 202014011298 U1 | 08 March 2019 |
| | | EP 2873671 A1 | 20 May 2015 |
| | | EP 2873671 B1 | 04 July 2018 |
| | | EP 2975043 A1 | 20 January 2016 |
| | | EP 2975043 B1 | 19 September 2018 |
| | | EP 2980104 A1 | 03 February 2016 |
| | | EP 2980104 B1 | 04 November 2020 |
| | | EP 2982677 A1 | 10 February 2016 |
| | | EP 2982677 B1 | 01 August 2018 |
| | | JP 2015-533850 A | 26 November 2015 |
| | | JP 5972474 B2 | 17 August 2016 |
| | | KR 10-1528102 B1 | 10 June 2015 |
| | | KR 10-1577145 B1 | 11 December 2015 |
| | | KR 10-1585340 B1 | 14 January 2016 |
| | | KR 10-1603016 B1 | 11 March 2016 |
| | | KR 10-2015-0034592 A | 03 April 2015 |
| | | KR 10-2015-0034652 A | 03 April 2015 |
| | | KR 10-2015-0034653 A | 03 April 2015 |
| | | KR 10-2015-0034654 A | 03 April 2015 |
| | | US 2015-0094435 A1 | 02 April 2015 |
| | | US 2015-0361196 A1 | 17 December 2015 |
| | | US 2016-0046735 A1 | 18 February 2016 |
| | | US 2016-0272743 A1 | 22 September 2016 |
| | | US 9376519 B2 | 28 June 2016 |
| | | US 9481747 B2 | 01 November 2016 |
| | | US 9550848 B2 | 24 January 2017 |
| | | US 9683061 B2 | 20 June 2017 |
| | | WO 2015-046705 A1 | 02 April 2015 |
| | | WO 2015-046930 A1 | 02 April 2015 |
| | | WO 2015-046931 A1 | 02 April 2015 |
| | | WO 2015-046932 A1 | 02 April 2015 |
| KR 10-2021-0067264 A | 08 June 2021 | None | |
| KR 10-2021-0067338 A | 08 June 2021 | None | |
| KR 10-2021-0031460 A | 19 March 2021 | AR 115763 A1 | 24 February 2021 |
| | | BR 112021000389 A2 | 06 April 2021 |
| | | CA 3011041 A1 | 11 January 2020 |
| | | CN 112601767 A | 02 April 2021 |
| | | EP 3820917 A2 | 19 May 2021 |
| | | JP 2021-532209 A | 25 November 2021 |
| | | US 11279819 B2 | 22 March 2022 |

Form PCT/ISA/210 (patent family annex) (July 2022)

**INTERNATIONAL SEARCH REPORT**
**Information on patent family members**

International application No.
**PCT/KR2022/018707**

| Patent document cited in search report | Publication date (day/month/year) | Patent family member(s) | Publication date (day/month/year) |
|---|---|---|---|
| | | US 2020-0017668 A1 | 16 January 2020 |
| | | WO 2020-012314 A2 | 16 January 2020 |
| | | WO 2020-012314 A3 | 09 April 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4752597 A